# FASCICULE DE BREVET EUROPEEN

(11) **EP 3 900 227 B1**
(45) Date de publication et mention de la délivrance du brevet: **30.07.2025**
(21) Numéro de dépôt: 19828773.2
(22) Date de dépôt: 20.12.2019
(51) Int. Cl.: H04B 13/00, B41C 1/04, G04B 45/00

(54) **PROCEDE ET SYSTEME DE TRANSMISSION D'AU MOINS UN MESSAGE PAR L'INTERMEDIAIRE D'UNE PIECE D'HORLOGERIE**
VERFAHREN UND SYSTEM ZU ÜBERTRAGUNG MINDESTENS EINER NACHRICHT ÜBER EINE UHR
METHOD AND SYSTEM FOR TRANSMISSION OF AT LEAST ONE MESSAGE BY MEANS OF A TIMEPIECE

(30) Priorité: 21.12.2018 EP 18215635
(43) Date de publication de la demande: 27.10.2021
(73) Titulaire: Montres Rado S.A., 2543 Lengnau (CH)
(72) Inventeur: NAVA, Sergio, 23900 Lecco (IT); FUMAGALLI, Daniele, 23842 Bosisio Parini (IT); RONZONI, Lorenzo, 20822 Seveso (IT)
(74) Mandataire: ICB SA
(86) Numéro de dépôt international: PCT/EP2019/086785
(87) Numéro de publication internationale: WO 2020/128035

(56) Documents cités:
- US-A1- 2018 248 874

## Description

### Domaine de l'invention

L'invention porte sur un procédé de transmission d'au moins un message par l'intermédiaire d'une pièce d'horlogerie et sur un système mettant en œuvre un tel procédé.

L'invention porte également sur un programme d'ordinateur comprenant des instructions de code de programme pour l'exécution des étapes de ce procédé.

### Arrière-plan de l'invention

Dans l'état de la technique, différents procédés participent à la transmission d'un message par l'intermédiaire d'une pièce d'horlogerie. On connaît par exemple des procédés consistant à imprimer un tel message sur une partie de la pièce d'horlogerie telle que le bracelet afin que le porteur à qui est destiné le message en prenne connaissance dès lors qu'il est en possession de cette dernière. On connaît également, d'autres procédés visant à transmettre ce message par l'intermédiaire d'un écran compris dans une partie constitutive de la pièce d'horlogerie par exemple le cadran, de tels procédés mettant en œuvre pour la diffusion de ce message des technologies de télécommunication entre un serveur distant et ladite pièce pourvue de cet écran.

Toutefois de tels procédés présentent un inconvénient majeur lié à la sécurité et la confidentialité dans la transmission d'un tel message. En effet, d'autres individus que le porteur de la pièce d'horlogerie, peuvent également prendre connaissance de ce message dès lors qu'ils sont en possession de cette pièce d'horlogerie.

### Résumé de l'invention

Un des buts de la présente invention est de pallier tout ou partie des inconvénients cités précédemment en fournissant un procédé et un système assurant une confidentialité et une sécurité optimales dans le cadre de la transmission d'un message par l'intermédiaire d'une pièce d'horlogerie.

A cet effet, l'invention porte sur un procédé de transmission d'au moins un message entre un premier dispositif électronique d'un premier utilisateur et un deuxième dispositif électronique d'un deuxième utilisateur par l'intermédiaire d'une pièce d'horlogerie selon les caractéristiques de la revendication indépendante 1.

Ainsi grâce à ces caractéristiques, le message est alors rendu accessible uniquement à partir de la représentation figurative qui comprend ou constitue un identifiant de ce message, lequel identifiant étant par conséquent compris sur/dans la zone de support de la pièce d'horlogerie pour une diffusion sécurisée et confidentielle de ce message au porteur de cette pièce à partir d'un dispositif électronique en sa possession.

Dans d'autres modes de réalisation :
- l'étape de génération comprend une sous-étape de sélection à partir d'une interface homme-machine du premier dispositif électronique d'un modèle de représentation visuelle numérique parmi différents modèles affichés sur un module d'affichage de ce premier dispositif électronique ;
- l'étape de génération comprend une sous-étape d'application de critères de modification à au moins un paramètre descriptif de la représentation visuelle numérique sélectionnée ;
- l'étape de diffusion comprend une sous-étape de numérisation de la représentation figurative réalisée sur/dans la zone de support à partir du deuxième dispositif électronique ;
- l'étape de diffusion comprend une sous-étape d'identification du message à diffuser ;
- l'étape de diffusion comprend une sous-étape de transmission au deuxième dispositif électronique des données numériques de message relatives audit message identifié ;
- l'étape d'édification comprend une sous-étape de génération par une unité de contrôle du serveur d'au moins une instruction de pilotage d'un dispositif de construction de ladite représentation graphique en fonction de caractéristiques descriptives de la représentation graphique numérique de diffusion ;
- l'étape d'édification comprend une sous-étape de construction de la représentation graphique sur/dans la zone de support, ladite sous-étape mettant en œuvre un processus de retrait de matière dans cette zone de support et/ou un processus de dépôt d'au moins une couche de matière sur cette zone de support ;
- le procédé comprend une étape de construction de la pièce d'horlogerie comportant une sous-étape d'assemblage d'un ensemble de composants constituant ladite pièce d'horlogerie dont fait partie ledit au moins un composant comprenant la zone de support pourvue de la représentation graphique ;
- la zone de support est définie sur un seul composant de la pièce d'horlogerie notamment un cadran de la pièce d'horlogerie ;
- la zone de support est définie sur plusieurs composants distincts de la pièce d'horlogerie ;
- ledit au moins un message est du type audio et/ou vidéo ou encore graphique,
- la représentation figurative est de type bidimensionnelle ou tridimensionnelle.

L'invention porte aussi sur un système de transmission d'au moins un message entre un premier dispositif électronique d'un premier utilisateur et un deuxième dispositif électronique d'un deuxième utilisateur par l'intermédiaire d'une pièce d'horlogerie mettant en œuvre un tel procédé, le système comprenant les premier et deuxième dispositifs électroniques, un serveur comportant une base de données pourvue d'au moins un modèle de représentation graphique numérique et un dispositif de construction d'éléments visuels sur/dans une zone de support du message définie sur tout ou partie de la pièce d'horlogerie, les premier et deuxième dispositifs électroniques et le dispositif de construction étant connectés audit serveur.

L'invention porte en outre sur un programme d'ordinateur comprenant des instructions de code de programme pour l'exécution des étapes du procédé lorsque ledit programme est exécuté par des unités de contrôle et de traitement de respectivement du serveur et des premier et deuxième dispositifs électroniques.

### Description sommaire des dessins

D'autres particularités et avantages ressortiront clairement de la description qui en est faite ci-après, à titre indicatif et nullement limitatif, en référence aux dessins annexés, dans lesquels :

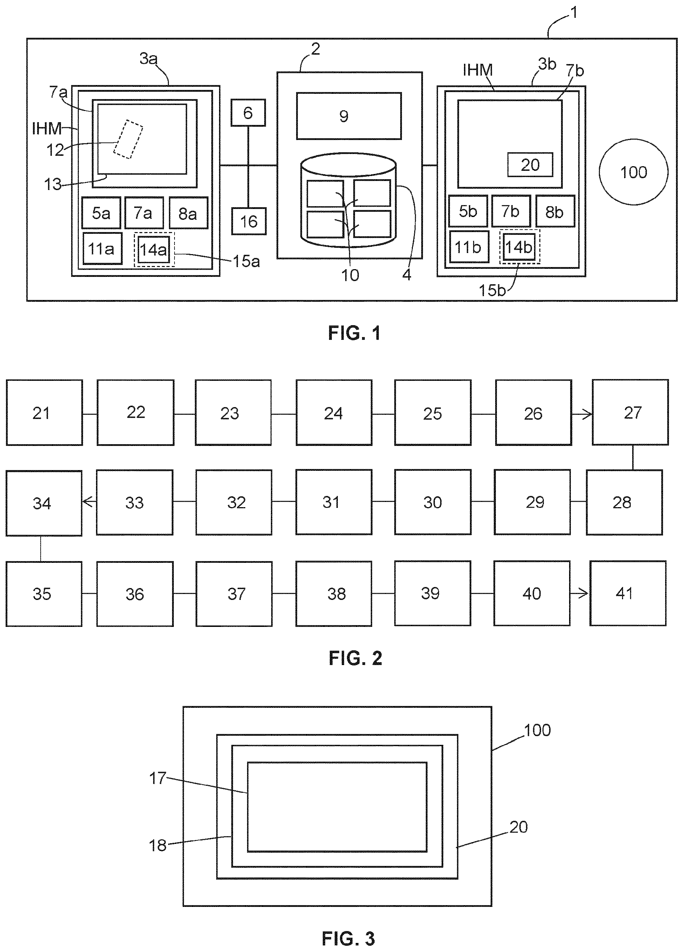

- la figure 1 est une représentation d'un système de transmission d'au moins d'au moins un message entre un premier dispositif électronique d'un premier utilisateur et un deuxième dispositif électronique d'un deuxième utilisateur par l'intermédiaire d'une pièce d'horlogerie, selon un mode de réalisation de l'invention ;
- la figure 2 est un logigramme relatif à un procédé de transmission dudit au moins un message entre le premier dispositif électronique du premier utilisateur et le deuxième dispositif électronique du deuxième utilisateur par l'intermédiaire de la pièce d'horlogerie, selon le mode de réalisation de l'invention, et
- la figure 3 représente la pièce d'horlogerie qui est apte à participer à la transmission dudit au moins un message, selon le mode de réalisation de l'invention.

### Description détaillée des modes de réalisation préférés

En référence à la figure 1, le système de transmission 1 d'au moins un message par l'intermédiaire d'une pièce d'horlogerie 100 comprend :
- des premier et deuxième dispositifs électroniques 3a, 3b ;
- un serveur distant 2 comportant une base de données 4 pourvue d'une pluralité de modèles de représentation visuelle numérique 10 et de paramètres descriptifs associés à chacun de ces modèles 10 ;
- un dispositif de construction 6 d'éléments visuels de pièces d'horlogerie 100 autrement appelé dispositif de construction 6 de représentations figuratives sur des pièces d'horlogerie 100, ces éléments visuels/représentations figuratives pouvant être à deux ou trois dimensions et
- une architecture réseau sans fil et/ou filaire reliant les premier et deuxième dispositifs électroniques 3a, 3b et le serveur distant 2 entre eux ainsi que ce serveur 2 avec le dispositif de construction 6.

Un tel système 1 permet ainsi à un premier utilisateur de ce système 1 à transmettre à un deuxième utilisateur porteur de la pièce d'horlogerie, un message réalisé à partir notamment du premier dispositif électronique 3a. Un tel message est diffusé par le deuxième dispositif électronique 3b du deuxième utilisateur en étant rendu accessible à partir d'une représentation figurative 17 présente sur tout ou partie de la pièce d'horlogerie 100. Une telle pièce d'horlogerie 100 visible sur la figure 3, peut-être une pièce d'horlogerie 100 pour la transmission d'au moins un message ou encore une pièce d'horlogerie 100 apte à participer à la transmission dudit au moins un message.

Dans ce système 1, ce serveur 2 comprend donc la base de données 4, une unité de contrôle 9 ainsi qu'une unité de communication. Ainsi que nous l'avons évoqué précédemment, ce serveur 2 comprend une pluralité de modèles de représentation graphique numérique 10. Chaque modèle de représentation visuelle numérique 10, peut-être une représentation graphique numérique bidimensionnelle 2D ou tridimensionnelle 3D. Ce modèle de représentation visuelle numérique 10 peut être généré par un module de conception du système 1 qui est relié à l'unité de contrôle 9 du serveur 2 pouvant comprendre un dispositif de numérisation bidimensionnelle/tridimensionnelle. Ce modèle 10 peut aussi être généré par un outil logiciel exécuté par l'unité de contrôle 9, un tel outil permettant une modélisation virtuelle à partir de photographies, d'images ou d'objets, ou encore de concevoir un objet numérique virtuel (par exemple un logiciel de conception assistée par ordinateur plus connue sous l'acronyme CAO).

Ainsi que nous l'avons évoqué précédemment, chaque modèle de représentation visuelle numérique 10 est associé à des paramètres descriptifs. Ces paramètres descriptifs définissent notamment l'aspect/l'apparence visuel du modèle de représentation visuelle numérique 10. Dans ce contexte, ces paramètres descriptifs comprennent de manière non limitative et non exhaustive :
- une forme du ou des objets graphiques bidimensionnels et/ou tridimensionnels constituant la représentation graphique numérique 10, cette forme peut être une forme géométrique du type cercle, sphère, ellipse, cône, cylindre, tronc de cône, triangle, polyèdre, une combinaison d'au moins deux formes géométriques différentes ou similaires, etc... ;
- des dimensions du ou des objets graphiques bidimensionnels et/ou tridimensionnels constituant le modèle de représentation visuelle numérique 10, ces dimensions peuvent correspondre à une épaisseur, une largeur, une longueur, profondeur, une surface, un volume, etc... ;
- une ou des couleurs constituant chaque objet graphiques bidimensionnel et/ou tridimensionnel ;
- une texture constituant la ou les faces de chaque objet graphiques bidimensionnel et/ou tridimensionnel ;
- une position relative aux différents objets graphiques bidimensionnels et/ou tridimensionnels entre eux lorsque le modèle de représentation visuelle numérique 10 comprend plusieurs de ces objets.

Dans ce serveur 2, l'unité de contrôle 9 comprend des ressources matérielles et logicielles en particulier au moins un processeur coopérant avec des éléments de mémoire. Cette unité de contrôle 9 est apte à exécuter des instructions pour la mise en œuvre d'un programme d'ordinateur visant par exemple à assurer la gestion de la base de données 4 du serveur 2, le pilotage du dispositif de construction 6 et/ou encore le traitement des requêtes/instructions/données provenant/transmises du/vers les premier et deuxième dispositifs électroniques 3a, 3b notamment du/vers leur unité de traitement 5a, 5b.

On notera que l'unité de contrôle 9 est connectée au dispositif de construction 6 et aux premier et deuxième dispositifs électroniques 3a, 3b par l'intermédiaire de l'unité de communication du serveur 2. Une telle unité de communication est apte à mettre en œuvre des protocoles de communication sécurisés au sein de l'architecture réseau de ce système 1.

Dans ce système 1, les premier et deuxième dispositifs électroniques 3a, 3b peuvent être par exemple un ordinateur, un ordiphone, un smartphone, une tablette, ou encore une borne électronique. De tels premier et deuxième dispositifs électroniques 3a, 3b comprennent chacun de manière non limitative ou non exhaustive :
- l'unité de traitement 5a, 5b comportant des ressources matérielles et logicielles en particulier au moins un processeur coopérant avec des éléments de mémoire ;
- un module d'affichage 7a, 7b de type écran visible sur la figure 1 et affichant une représentation visuelle de données d'information 13 ;
- une interface de diffusion d'une information sonore telle qu'un haut-parleur ;
- une interface de communication permettant d'établir une liaison de communication entre l'unité de traitement 5a, 5b et l'unité de contrôle 9 du serveur 2 pour la réalisation d'échange de données ;
- une interface de sélection 8a, 8b tel qu'un clavier ou encore une interface tactile comprise par exemple dans le module d'affichage 7a, 7b,
- au moins un module de capture d'un flux audio 11a, 11b comprenant au moins un microphone ;
- au moins un module de capture d'un flux lumineux 14a, 14b également appelé module de capture d'au moins une image comprenant notamment un capteur d'images du type par exemple capteurs matriciels CCD (pour « Charged Coupled Device » en anglais) ou encore CMOS (pour « Complementary Metal-Oxide-Semiconductor » en anglais)
- un module de numérisation 15a, 15b encore appelé module de scannage, pouvant comprendre ledit au moins un module de capture d'un flux lumineux 14a, 14b, et
- une interface homme-machine IHM.

Dans chacun de ces deux dispositifs électroniques 3a, 3b, l'unité de traitement 5a, 5b est reliée entre autres au module d'affichage 7a, 7b, à l'interface de diffusion, à l'interface de communication, à l'interface de sélection 8a, 8b et à l'interface homme-machine IHM. Cette unité de traitement 5a, 5b est notamment apte à exécuter des instructions pour la mise en œuvre du programme d'ordinateur visant par exemple à assurer le traitement des requêtes/instructions/données provenant/transmises :
- du/vers le serveur 2, notamment du/vers son unité de contrôle 9, et/ou
- du/vers l'interface homme-machine IHM.

L'interface homme-machine IHM de chacun de ces deux dispositifs électroniques 3a, 3b comprend notamment l'unité de traitement 5a, 5b, le module d'affichage 7a, 7b, les modules de capture de flux lumineux et audio 14a, 14b, 11a, 11b, et l'interface de sélection 8a, 8b avec laquelle un utilisateur du dispositif électronique 3 peut agir. En particulier, concernant notamment le premier dispositif électronique 3a mais pas exclusivement, l'interface homme-machine IHM comprend tout moyen technique et cognitif intervenant depuis la génération de la représentation visuelle de données d'information 13 contenant notamment des informations relatives aux modèles de représentation visuelle numérique 10 archivées dans la base de données 4 du serveur 2 en vue de leur affichage sur le module d'affichage 7a, jusqu'à une sélection d'abord d'un des modèles de représentation visuelle numérique 10 à partir de l'interface de sélection 8a du premier dispositif électronique 3a, et ensuite une réalisation d'une représentation graphique numérique de diffusion 12 résultant du traitement notamment dudit au moins un message et du modèle de représentation visuelle numérique 10. Dans ce contexte, cette représentation graphique numérique de diffusion 12 sert de base à la réalisation de la représentation figurative 17 sur/dans une zone de support 18 d'au moins un message de la pièce d'horlogerie 100. Dans ce contexte et ainsi que nous l'avons évoqué précédemment, une telle interface IHM comprend l'unité de traitement 5a du dispositif électronique 3a qui est notamment apte à générer la représentation visuelle de données d'information 13 provenant du serveur 2, le module d'affichage 7a à afficher la représentation visuelle de données d'information 13, l'interface de sélection 8a avec laquelle le premier utilisateur du dispositif électronique 3a peut agir ainsi que les modules de capture de flux lumineux et audio 14a, 14b, 11a, 11b qui participent à la réalisation de la représentation graphique numérique de diffusion 12. On notera que dans ce mode de réalisation de l'invention, la représentation visuelle de données d'information 13 résulte notamment d'un flux de données de contenu et de données d'application Web provenant du serveur 2. Les données de contenu telles que les modèles de représentation visuelle numérique 10 et les paramètres descriptifs, sont ici comprises dans des fichiers numériques multimédias archivés dans la base de données 4 du serveur 2. S'agissant des données d'application web, elles permettent de participer notamment à la manipulation des données de contenu ici dans ce cas par l'intermédiaire d'un outil de navigation web susceptible de comprendre un module d'extension d'affichage de modèle de représentation visuelle numérique 10 2D ou 3D de type « WebGL » et de l'interface homme-machine IHM. On comprend ici que les données de contenu et d'application web sont archivées dans la base de données 4 du serveur 2.

Ainsi que nous l'avons évoqué précédemment, la base de données 4 du serveur 2 archive des données de contenu telles que la pluralité de modèles de représentation visuelle numérique 10 dont un de ces derniers peut être préalablement sélectionné pour être modifié afin d'obtenir la représentation graphique numérique de diffusion 12 susceptible d'être reproduite sur/dans la zone de support 18 de la pièce d'horlogerie 100 à partir notamment du dispositif de construction 6.

Un tel dispositif de construction 6 visible sur la figure 1, comprend :
- un organe de retrait de matière, et/ou
- un organe de dépôt de matière, un organe de fixation et un organe d'entrainement.

Dans ce contexte, l'organe de retrait de matière comprend de préférence un élément d'usinage fonctionnant selon les différentes techniques d'usinages connues dans l'état de l'art afin de réaliser une représentation figurative 17 bidimensionnelle 2D ou tridimensionnelle 3D.

Dans ce dispositif de construction 6, l'organe de dépôt de matière peut permettre d'appliquer de la matière sur la zone de support 18 du composant 20 de la pièce d'horlogerie 100 de préférence par impression afin de réaliser la représentation figurative 17 bidimensionnelle 2D ou tridimensionnelle 3D. Dans ce contexte, un tel organe de dépôt comprend plusieurs entités d'impression notamment des cartouches d'impression à jet de matière en particulier à jet d'encre. Dans le présent mode de réalisation, chaque cartouche comprend au moins une tête d'impression et au moins un réservoir. Dans ces cartouches, la matière peut être colorée en comprenant une encre colorée comportant des particules pigmentées, et/ou présenter des propriétés fonctionnelles. De telles propriétés fonctionnelles peuvent porter sur des caractéristiques fonctionnelles physiques et/ou chimiques de cette matière qui sont liées par exemple à :
- l'électroluminescence ;
- la photoluminescence (par exemple une réaction à un rayonnement ultraviolet) ;
- la phosphorescence,
- « X-chromisme » (photochrome, électrochrome, thermochrome, ionochrome, mécanochrome...),
- etc...

Dans ce dispositif de construction 6, l'organe d'entrainement est apte à provoquer le déplacement de l'organe de dépôt de matière et/ou de retrait de matière dans différentes directions relativement à au moins un composant 20 de la pièce d'horlogerie 100 susceptible de comprendre la zone de support 18 sur laquelle doit être réalisée la représentation figurative 17. En effet, cette zone de support 18 peut être définie sur un seul composant 20 de cette pièce d'horlogerie 100, par exemple le cadran ou encore sur plusieurs composants 20 tels que le réhaut et le cadran. On notera que la zone de support 18 est de préférence définie sur tout ou partie dudit au moins un composant 20 qui est visible lorsque la pièce d'horlogerie 100 est portée par le deuxième utilisateur ici le porteur de ladite pièce d'horlogerie 100. Dans le présent mode de réalisation, cette zone de support 18 est définie par exemple sur une partie d'une face visible du cadran.

S'agissant de l'organe de fixation, il est prévu pour assurer la fixation d'au moins une couche de la matière sur cette zone de support 18, ou sur une première couche ou couche initiale de matière déjà présente sur cette zone 18. Cet organe de fixation comprend un module susceptible d'émettre un rayonnement ultraviolet UV et/ou infrarouge et/ou un flux d'air notamment un flux d'air chaud. Ce module est apte à générer un rayonnement ou un flux d'air sur tout ou partie de la zone de support 18.

En outre, on notera que le système 1 comprend un élément de support 16 prévu pour recevoir ledit au moins un composant 20 de la pièce d'horlogerie 100 susceptible de comprendre la zone de support 18 en prévision du dépôt ou du retrait de matière.

En référence à la figure 2, ce système 1 met en œuvre un procédé de transmission d'au moins un message par l'intermédiaire de la pièce d'horlogerie 100.

Un tel procédé comprend une étape de création 21 par le premier dispositif électronique 3a du premier utilisateur, du message à transmettre. Cette étape 21 mise en œuvre par le premier dispositif 3a, comprend une sous-étape de génération 22 des données numériques de message à partir du traitement par exemple à partir de la capture :
- d'un flux audio correspondant à un message sonore qui est enregistré au moyen d'au moins un module de capture d'un flux audio 11a et de l'unité de traitement 5a du premier dispositif électronique 3a ;
- d'un flux lumineux correspondant à un message de type photographique bidimensionnel ou tridimensionnel, ou de type graphique bidimensionnel ou tridimensionnel qui est enregistré au moyen d'au moins un module de capture d'un flux lumineux 14a et de l'unité de traitement 5a du premier dispositif électronique 3a ;
- d'un flux lumineux correspondant à un message de type vidéo bidimensionnel ou tridimensionnel qui est enregistré au moyen d'au moins un module de capture d'un flux lumineux 14a et de l'unité de traitement 5a du premier dispositif électronique 3a, ou
- des flux audio et lumineux simultanés correspondant à un message audio-vidéo qui sont enregistrés au moyen des modules de capture d'un flux lumineux 14a et d'un flux audio 11a ainsi que de l'unité de traitement 5a du premier dispositif électronique 3a.

Dans ce contexte, les flux audio et/ou vidéo sont donc capturés par le premier dispositif électronique 3a susceptible d'être contrôlé/piloté par le premier utilisateur et ce, dans l'optique de définir le type et le contenu du message qu'il souhaite transmettre au deuxième utilisateur.

Par la suite, le procédé comprend une étape d'archivage 23 dudit message créé dans un serveur distant et dans ledit premier dispositif électronique (3a) sous la forme de données numériques de message. Ces données numériques de message sont comprises dans un fichier numérique stocké dans la base de données 4 du serveur 2.

Le procédé prévoit ensuite une étape de génération 24 par le serveur distant 2 et par ledit premier dispositif électronique 3a d'une représentation graphique numérique de diffusion dudit message. Cette représentation graphique numérique de diffusion 12 autrement appelée représentation graphique numérique de référence, participe à la diffusion du message sur le deuxième dispositif électronique 3b comme on le verra par la suite en étant représentée sur la pièce d'horlogerie 100 sous la forme d'une représentation figurative 17. Une telle étape 24 prévoit en particulier l'élaboration de cette représentation graphique numérique de diffusion 12 qui constitue un identifiant du message à transmettre car une telle représentation graphique 12 est ici unique ou sensiblement unique.

Une telle étape de génération 24, comprend une sous-étape de sélection 25 à partir de l'interface homme-machine IHM du premier dispositif électronique 3a, d'un modèle de représentation visuelle numérique 10 choisi parmi les différents modèles 10 affichés sur le module d'affichage 7a de ce premier dispositif électronique 3a. Cette étape 24 comprend aussi une sous-étape de production 26 de données spécifiques auxdites données numériques de message. Lors de cette sous-étape 26, un traitement mis en œuvre par l'unité de traitement 5a du premier dispositif électronique 3a et/ou par l'unité de contrôle 9 du serveur 2, est alors appliqué à ces données numériques de message afin d'identifier les données spécifiques comprises dans ces données numériques de message. Lorsque les données numériques de message résultent de messages de type audio et/ou vidéo ou encore photographique ayant un contenu comprenant des caractéristiques biométriques relatives au premier utilisateur par exemple sa voix et/ou ses caractéristiques physiques, physiologiques ou comportementales, alors le traitement appliqué à ces données numériques permet d'identifier ces données spécifiques comprenant ces caractéristiques biométriques.

Par la suite, cette étape 24 comprend une sous-étape de conversion 27 par l'unité de traitement 5a et/ou l'unité de contrôle 9, de ces données spécifiques en des critères de modification/de codage du modèle de représentation visuelle numérique 10 sélectionnée. De tels critères de modification sont définis pour modifier au moins un paramètre descriptif du modèle de représentation visuelle numérique 10 sélectionné, les données numériques de message lors d'une sous-étape d'application 28 de ces critères de modification à au moins un paramètre descriptif de ce dit modèle de représentation visuelle numérique 10. Une telle sous-étape d'application 28 de l'étape de génération 24 mise en œuvre par l'unité de traitement 5a et/ou l'unit de contrôle 9, permet alors de faire varier par exemple la forme du ou des objets graphiques bidimensionnels et/ou tridimensionnels constituant ce modèle de représentation visuelle numérique 10, les dimensions du ou de ces objets graphiques, la ou leurs couleurs, la ou leurs textures et/ou leurs positions relatives lorsque ce modèle de représentation graphique numérique 10 comprend plusieurs de ces objets. Ainsi ce modèle de représentation visuelle numérique 10 en comprenant au moins un paramètre descriptif modifié constitue alors la représentation graphique numérique de diffusion 12.

Cette représentation graphique numérique de diffusion 12 ainsi générée qui comprend l'identifiant du message est alors lors de la réalisation d'une étape de stockage 29, archivé dans la base de données 4 du serveur 2 et/ou dans les éléments de mémoire de l'unité de traitement 5a du premier dispositif électronique 3a. Cette représentation graphique numérique de diffusion 12 est associée dans la base de données 4 aux données numériques de message correspondant.

Par la suite, le procédé comprend une étape d'édification 30 sur tout ou partie de la pièce d'horlogerie 100 par le dispositif de construction d'éléments visuels piloté par le serveur 2, d'une représentation figurative relative à ladite représentation graphique numérique de diffusion dudit message. Plus précisément, cette étape 30 comprend une sous-étape d'agencement 31 d'au moins un composant 20 de la pièce d'horlogerie 100 comprenant la zone de support 18 du message sur l'élément de support 16 du système 1 en prévision de la réalisation de la représentation figurative 17 relative à la représentation graphique numérique de diffusion 12 comprenant l'identifiant du message sur cette zone support 18.

Ensuite, l'étape d'édification 30 comprend une sous-étape de détermination 32 de caractéristiques descriptives de la représentation graphique numérique de diffusion 12. Lors de cette sous-étape 32, les caractéristiques descriptives déterminées comprennent par exemple :
- au moins une dimension de cette représentation graphique numérique de diffusion 12, il peut s'agir par exemple d'une épaisseur, d'une longueur, d'une largueur, d'une surface, d'un volume, etc... ;
- des aspects visuels/esthétiques/structurels c'est-à-dire visuels et/ou esthétiques et/ou structurels de la représentation graphique numérique de diffusion 12 tels que la couleur et/ou la texture, etc...
- des caractéristiques fonctionnelles physiques et/ou chimiques de la représentation graphique numérique de diffusion 12, telles que par exemple:
   - l'électroluminescence ;
   - la photoluminescence (par exemple une réaction à un rayonnement ultraviolet) ;
   - la phosphorescence ;
   - « X-chromisme » (photochrome, électrochrome, thermochrome, ionochrome, mécanochrome...) ;
   - etc...

Les caractéristiques descriptives ainsi déterminées sont ensuite archivées dans la base de données 4 du serveur 2.

L'étape d'édification 30 comprend ensuite une sous-étape de génération 33 par le serveur 2 et en particulier par son unité de contrôle 9, d'au moins une instruction de pilotage du dispositif de construction 6 en fonction des caractéristiques descriptives de ladite représentation graphique numérique de diffusion 12. Cette dite au moins une instruction comprend des critères de réalisation de la reproduction de la représentation graphique numérique de de diffusion 12 sur/dans la zone de support 18 de la pièce d'horlogerie 100, notamment des critères de pilotage du dispositif de construction 6.

Cette étape 30 prévoit ensuite une sous-étape de construction 34 de la représentation figurative 17 sur la zone de support 18 du message. Une telle sous-étape de construction 34 peut prévoir la mise en œuvre de :
- un processus de retrait de matière par le dispositif de construction 6 dans la zone de support 18 en fonction de ladite au moins une instruction de pilotage, ou
- un processus de dépôt d'au moins une couche de matière sur la zone de support 18 en fonction de ladite au moins une instruction de pilotage.

Lors de ce processus de retrait de matière, le dispositif de construction 6 notamment l'organe de retrait de matière comprenant de préférence un élément d'usinage, est alors piloté par l'unité de contrôle 9 du serveur 2 selon ladite au moins une instruction de pilotage comprenant les critères de réalisation tels que :
- un déplacement de l'organe de retrait relativement à la zone de support 18 pour la reproduction des caractéristiques des aspects visuels/esthétiques/structurels et/ou fonctionnelles d'au moins une dimension de la représentation graphique numérique de diffusion 12 ;
- une distance et/ou positionnement de l'organe de retrait relativement à la zone de support 18 pour la reproduction des caractéristiques des aspects visuels/esthétiques/structurels et/ou fonctionnelles d'au moins une dimension de la représentation graphique numérique de diffusion 12 ;
- un durée de positionnement de l'organe de retrait relativement à la zone de support 18 pour la reproduction des caractéristiques des aspects visuels/esthétiques/structurels et/ou fonctionnelles d'au moins une dimension de la représentation graphique numérique de diffusion 12.

Lors du processus de dépôt de matière, le dispositif de construction 6 notamment de l'organe d'impression et de l'organe de fixation, est alors piloté par l'unité de contrôle 9 du serveur 2 selon ladite au moins une instruction de pilotage comprenant les critères de réalisation tels que :
- une sélection des cartouches comprenant les têtes d'impression nécessaires à la reproduction de la représentation graphique numérique sur la zone de support 18 et ce, en fonction de la matière qu'elles contiennent, en particulier à la reproduction des caractéristiques relatives aux aspects visuels/esthétiques/structurels et/ou fonctionnelles de la représentation graphique numérique de diffusion 12;
- un déplacement de la tête d'impression de chaque cartouche relativement à la zone de support 18 pour la reproduction des caractéristiques des aspects visuels/esthétiques/structurels et/ou fonctionnelles d'au moins une dimension de la représentation graphique numérique de diffusion 12 ;
- une distance et/ou positionnement de la tête d'impression de chaque cartouche relativement à la zone de support 18 pour la reproduction des caractéristiques des aspects visuels/esthétiques/structurels et/ou fonctionnelles d'au moins une dimension de la représentation graphique numérique de diffusion 12 ;
- une durée de positionnement de la tête d'impression de chaque cartouche relativement à la zone de support 18 pour la reproduction des caractéristiques des aspects visuels/esthétiques/structurels et/ou fonctionnelles d'au moins une dimension de la représentation graphique numérique de diffusion 12 ;
- un débit de matière éjecté des têtes d'impression pour la reproduction des caractéristiques des aspects visuels/esthétiques/structurels et/ou fonctionnelles d'au moins une dimension de la représentation graphique numérique de diffusion 12.

Par la suite, ce procédé comprend une étape d'enlèvement 35 de l'élément de support 16 du système 1 dudit au moins un composant 20 de la pièce d'horlogerie 100 maintenant pourvu de la représentation figurative 17 comprenant l'identifiant du message avant d'être dirigé vers une chaine de montage de la pièce d'horlogerie 100. On notera que dans la mesure où la représentation figurative 17 est relative à la représentation graphique numérique de diffusion 12 comprenant l'identifiant du message, alors cette représentation figurative 17 comprend ou constitue donc cet identifiant du message.

Le procédé comprend ensuite une étape de construction 36 de la pièce d'horlogerie 100. Une telle étape 36 comprend une sous-étape d'assemblage 37 de l'ensemble des composants 20 constituant ladite pièce d'horlogerie 100 dont fait partie ledit au moins un composant 20 comprenant la zone de support 18 pourvue de la représentation figurative 17 comprenant l'identifiant du message.

Ensuite, le procédé comprend une étape de diffusion 38 dudit message par le deuxième dispositif électronique 3b du deuxième utilisateur à partir d'une représentation figurative numérique 19 résultant de la capture par ce deuxième dispositif électronique 3b de ladite représentation figurative comprise sur tout ou partie de la pièce d'horlogerie 100. Lors de cette étape 38, un tel message est alors diffusé au deuxième utilisateur par l'intermédiaire du module d'affichage 7b et/ou de l'interface de diffusion d'une information sonore. Cette étape 38 comprend une sous-étape de numérisation 39 de la représentation figurative 17 réalisée sur la zone de support 18 à partir du deuxième dispositif électronique 3b afin d'obtenir la représentation figurative numérique 19 encore appelée représentation graphique/visuelle numérisée de la représentation figurative 17. On notera qu'une telle numérisation/scannage peut être en trois dimensions si le deuxième dispositif électronique 3b est équipé d'un module de numérisation 15b comprenant de préférence au moins deux modules de capture d'un flux lumineux 14b. Lors de la réalisation de cette sous-étape 39, l'interface homme-machine IHM de ce deuxième dispositif électronique 3b comprenant notamment l'unité de traitement 5b, le module d'affichage 7b, les modules de capture de flux lumineux et audio 14b, 11b, et l'interface de sélection 8b peut être sollicitée afin d'améliorer la numérisation de cette représentation figurative 17. Cette numérisation de la représentation figurative 17 participe donc à la génération de la représentation figurative numérique 19 par le deuxième dispositif électronique 3b, une telle représentation figurative numérique 19 comprenant l'identifiant du message puisque la représentation figurative 17 dont elle résulte, a été édifiée à partir de la représentation graphique numérique de diffusion 12. Cette étape 38 comprend ensuite une sous-étape d'identification 40 du message à diffuser. Lors d'une telle sous-étape d'identification 40, l'unité de traitement 5b de ce deuxième dispositif électronique 3b et/ou l'unité de contrôle 9 du serveur 2 met par exemple en œuvre un traitement numérique de l'image visant à réaliser une comparaison entre la représentation figurative numérique 19 et la représentation graphique numérique de diffusion 12, afin d'identifier par exemple dans la base de données, les données numériques relatives au message à diffuser associées à cet identifiant du message c'est-à-dire ici à la représentation graphique numérique de diffusion 12.

Cette étape de diffusion 38 comprend par la suite une sous-étape de transmission 41 au deuxième dispositif électronique 3b des données numériques relatives audit message identifié. Lors de cette sous-étape 41 de telles données numériques qui sont comprises de préférence dans la base de données 4 du serveur 2 et qui sont relatives au message à diffuser, sont transmises de la base de données 4 à ce deuxième dispositif électronique 3b dès lors que l'unité de contrôle 9 du serveur 2 a reçu une requête comprenant l'identifiant du message. On notera qu'une telle étape de diffusion 38 peut requérir une identification du deuxième utilisateur avant la diffusion du message.

On remarquera que lors des échanges de données entre les premier et deuxième dispositifs électroniques 3a, 3b avec le serveur 2, le procédé prévoit de préférence l'établissement d'une liaison sécurisée entre ces premier et deuxième dispositifs électroniques 3a, 3b et le serveur 2 et ce, par l'intermédiaire de l'interface et du module de communication.

L'invention porte également un programme d'ordinateur comprenant des instructions de code de programme pour l'exécution des étapes 21 à 41 de ce procédé lorsque ledit programme est exécuté par les unités de contrôle 9 et de traitement 5a, 5b de respectivement du serveur 2 et des premier et deuxième dispositifs électroniques 3a, 3b.

## Revendications

1. Procédé de transmission d'au moins un message entre un premier dispositif électronique (3a) d'un premier utilisateur et un deuxième dispositif électronique (3b) d'un deuxième utilisateur par l'intermédiaire d'une pièce d'horlogerie (100), lesdits premier et deuxième dispositifs électroniques étant connectés à un serveur distant, comprenant les étapes suivantes :
- création (21) par le premier dispositif électronique (3a) du premier utilisateur du message à transmettre ;
- archivage (23) dudit message créé dans le serveur distant et dans ledit premier dispositif électronique (3a) sous la forme de données numériques de message ;
- génération (24) par le serveur distant et par ledit premier dispositif électronique (3a) d'une représentation graphique numérique de diffusion dudit message, cette représentation graphique numérique de diffusion (12) ainsi générée est alors lors de la réalisation d'une étape de stockage (29), archivé dans la base de données (4) du serveur (2) et/ou dans les éléments de mémoire de l'unité de traitement (5a) du premier dispositif électronique (3a) ;
- édification (30) sur une zone de support définie sur tout ou partie de la pièce d'horlogerie (100) par un dispositif de construction d'éléments visuels piloté par le serveur d'une représentation figurative relative à ladite représentation graphique numérique de diffusion dudit message ;
- diffusion (38) dudit message par le deuxième dispositif électronique (3b) du deuxième utilisateur à partir d'une représentation figurative numérique résultant de la capture par ce deuxième dispositif électronique (3b) de ladite représentation figurative comprise sur tout ou partie de la pièce d'horlogerie (100).

2. Procédé selon la revendication précédente, **caractérisé en ce que** l'étape de génération (24) comprend une sous-étape de sélection (25) à partir d'une interface homme-machine (IHM) du premier dispositif électronique (3a) d'un modèle de représentation visuelle numérique (10) parmi différents modèles (10) affichés sur un module d'affichage (7a) de ce premier dispositif électronique (3a), ladite représentation graphique numérique de diffusion (12) résultant du traitement notamment dudit au moins un message et du modèle de représentation visuelle numérique (10).

3. Procédé selon la revendication précédente, **caractérisé en ce que** l'étape de génération (24) comprend une sous-étape d'application (28) de critères de modification à au moins un paramètre descriptif du modèle de représentation visuelle numérique (10) sélectionnée.

4. Procédé selon l'une quelconque des revendications précédentes, **caractérisé en ce que** l'étape de diffusion (38) comprend une sous-étape de numérisation (39) de la représentation figurative (17) réalisée sur/dans la zone de support (18) à partir du deuxième dispositif électronique (3b).

5. Procédé selon la revendication précédente, **caractérisé en ce que** l'étape de diffusion (38) comprend une sous-étape d'identification (40) du message à diffuser.

6. Procédé selon la revendication précédente, **caractérisé en ce que** l'étape de diffusion (38) comprend une sous-étape de transmission (41) au deuxième dispositif électronique (3b) des données numériques de message relatives audit message identifié.

7. Procédé selon l'une quelconque des revendications précédentes, **caractérisé en ce que** l'étape d'édification (30) comprend une sous-étape de génération (33) par une unité de contrôle (9) du serveur (2) d'au moins une instruction de pilotage d'un dispositif de construction (6) de ladite représentation figurative (17) en fonction de caractéristiques descriptives de la représentation graphique numérique de diffusion (12).

8. Procédé selon l'une quelconque des revendications précédentes, **caractérisé en ce que** l'étape d'édification (30) comprend une sous-étape de construction (34) de la représentation figurative (17) sur/dans la zone de support (18), ladite sous-étape (34) mettant en œuvre un processus de retrait de matière dans cette zone de support (18) et/ou un processus de dépôt d'au moins une couche de matière sur cette zone de support (18).

9. Procédé selon l'une quelconque des revendications précédentes, **caractérisé en ce qu'**il comprend une étape de construction (36) de la pièce d'horlogerie (100) comportant une sous-étape d'assemblage (37) d'un ensemble de composants (20) constituant ladite pièce d'horlogerie (100) dont fait partie au moins un composant (20) comprenant la zone de support (18) pourvue de la représentation figurative (17).

10. Procédé selon l'une quelconque des revendications précédentes, **caractérisé en ce que** la zone de support (18) est définie sur :
- un seul composant (20) de la pièce d'horlogerie (100) notamment un cadran de la pièce d'horlogerie (100), ou
- plusieurs composants (20) distincts de la pièce d'horlogerie (100).

11. Procédé selon l'une quelconque des revendications précédentes, **caractérisé en ce que** ledit au moins un message est du type audio et/ou vidéo ou encore graphique.

12. Procédé selon l'une quelconque des revendications précédentes, **caractérisé en ce que** la représentation figurative (17) est de type bidimensionnelle ou tridimensionnelle.

13. Système (1) de transmission d'au moins un message entre un premier dispositif électronique (3a) d'un premier utilisateur et un deuxième dispositif électronique (3b) d'un deuxième utilisateur par l'intermédiaire d'une pièce d'horlogerie (100), configuré pour mettre en œuvre le procédé selon l'une quelconque des revendications précédentes, le système (1) comprenant les premier et deuxième dispositifs électroniques (3a, 3b), un serveur (2) comportant une base de données (4) pourvue d'au moins un modèle de représentation graphique numérique (10) et un dispositif de construction (6) d'éléments visuels sur/dans une zone de support (18) du message définie sur tout ou partie de la pièce d'horlogerie (100), les premier et deuxième dispositifs électroniques (3a, 3b) et le dispositif de construction (6) étant connectés audit serveur (2).

14. Programme d'ordinateur comprenant des instructions de code de programme pour l'exécution des étapes du procédé selon les revendications 1 à 12 lorsque ledit programme est exécuté par des unités de contrôle et de traitement (9, 5a, 5b) de respectivement du serveur (2) et des premier et deuxième dispositifs électroniques (3a, 3b).

## Patentansprüche

1. Verfahren für ein Senden mindestens einer Nachricht zwischen einer elektronischen Vorrichtung (3a) eines ersten Benutzers und einer elektronischen Vorrichtung (3b) eines zweiten Benutzers über einen Zeitmesser (100), wobei die erste und zweite elektronische Vorrichtung mit einem entfernten Server verbunden sind, umfassend die folgenden Schritte:
- Erstellen (21) der von der elektronischen Vorrichtung (3a) des ersten Benutzers zu sendenden Nachricht;
- Archivieren (23) der erstellten Nachricht auf dem entfernten Server und in der ersten elektronischen Vorrichtung (3a) in Form von digitalen Nachrichtendaten;
- Erzeugen (24), durch den entfernten Server und durch die erste elektronische Vorrichtung (3a), einer digitalen grafischen Darstellung für eine Verbreitung der Nachricht; diese so erzeugte digitale grafische Darstellung für eine Verbreitung (12) wird dann, wenn ein Speicherschritt (29) ausgeführt wird, in der Datenbank (4) des Servers (2) und/oder in dem Speicher der Verarbeitungseinheit (5a) der ersten elektronischen Vorrichtung (3a) archiviert;
- Aufbauen (30) einer bildlichen Darstellung betreffend die digitale grafische Darstellung für eine Verbreitung der Nachricht auf einer Ruhezone, die auf dem gesamten Zeitmesser (100) oder einem Teil davon definiert ist, unter Verwendung einer Vorrichtung für ein Aufbauen visueller Elemente, die von dem Server gesteuert wird;
- Verbreiten (38) der Nachricht durch die elektronische Vorrichtung (3b) des zweiten Benutzers ausgehend von einer digitalen bildlichen Darstellung, die sich aus der Erfassung der bildlichen Darstellung, die auf dem gesamten Zeitmesser (100) oder einem Teil davon enthalten ist, durch diese zweite elektronische Vorrichtung (3b) ergibt.

2. Verfahren nach dem vorhergehenden Anspruch, **dadurch gekennzeichnet, dass** der Erzeugungsschritt (24) einen Auswahl-Unterschritt (25) für ein Auswählen, über eine Mensch-Maschine-Schnittstelle (HMI) auf der ersten elektronischen Vorrichtung (3a), einer digitalen visuellen Modelldarstellung (10) unter verschiedenen Modellen (10) umfasst, die auf einem Anzeigemodul (7a) auf dieser ersten elektronischen Vorrichtung (3a) angezeigt werden, wobei die digitale grafische Darstellung für eine Verbreitung (12) insbesondere aus der Verarbeitung der mindestens einen Nachricht und der digitalen visuellen Modelldarstellung (10) resultiert.

3. Verfahren nach dem vorhergehenden Anspruch, **dadurch gekennzeichnet, dass** der Erzeugungsschritt (24) einen Anwendungs-Unterschritt (28) für ein Anwenden von Modifikationskriterien auf mindestens einen beschreibenden Parameter des ausgewählten digitalen visuellen Modelldarstellung (10) umfasst.

4. Verfahren nach einem der vorhergehenden Ansprüche, **dadurch gekennzeichnet, dass** der Verbreitungsschritt (38) einen Digitalisierungs-Unterschritt (39) für ein Digitalisieren der auf/in der Ruhezone (18) erzeugten bildlichen Darstellung (17) von der zweiten elektronischen Vorrichtung (3b) umfasst.

5. Verfahren nach dem vorhergehenden Anspruch, **dadurch gekennzeichnet, dass** der Verbreitungsschritt (38) einen Identifikations-Unterschritt (40) für ein Identifizieren der zu verbreitenden Nachricht umfasst.

6. Verfahren nach dem vorhergehenden Anspruch, **dadurch gekennzeichnet, dass** der Verbreitungsschritt (38) einen Übertragungs-Unterschritt (41) für ein Übertragen von digitalen Nachrichtendaten betreffend die identifizierte Nachricht an die zweite elektronische Vorrichtung (3b) umfasst.

7. Verfahren nach einem der vorhergehenden Ansprüche, **dadurch gekennzeichnet, dass** der Aufbauschritt (30) einen Erzeugungs-Unterschritt (33) für ein Erzeugen mindestens einer Anweisung für ein Steuern einer Aufbauvorrichtung (6) für ein Aufbauen der bildlichen Darstellung (17) gemäß den beschreibenden Merkmalen der digitalen grafischen Darstellung für eine Verbreitung (12) über eine Steuereinheit (9) auf dem Server (2) umfasst.

8. Verfahren nach einem der vorhergehenden Ansprüche, **dadurch gekennzeichnet, dass** der Aufbauschritt (30) einen Aufbau-Unterschritt (34) für ein Aufbauen der bildlichen Darstellung (17) auf/in der Ruhezone (18) umfasst, wobei der Unterschritt (34) einen Materialentfernungsprozess in dieser Ruhezone (18) und/oder einen Prozess des Ablegens mindestens einer Materialschicht auf dieser Ruhezone (18) implementiert.

9. Verfahren nach einem der vorhergehenden Ansprüche, **dadurch gekennzeichnet, dass** es einen Aufbauschritt (36) für ein Aufbauen des Zeitmessers (100) umfasst, der einen Montage-Unterschritt (37) für ein Montieren eines Satzes von Komponenten (20) umfasst, die den Zeitmesser (100) bilden, zu dem die mindestens eine Komponente (20) gehört, die die mit der bildlichen Darstellung (17) versehene Ruhezone (18) umfasst.

10. Verfahren nach einem der vorhergehenden Ansprüche, **dadurch gekennzeichnet, dass** die Ruhezone (18) definiert ist auf:
- einer einzelnen Komponente (20) des Zeitmessers (100), insbesondere einem Zifferblatt des Zeitmessers (100), oder
- einer Mehrzahl von einzelnen Komponenten (20) des Zeitmessers (100).

11. Verfahren nach einem der vorhergehenden Ansprüche, **dadurch gekennzeichnet, dass** mindestens eine Nachricht eine Audio- und/oder Videonachricht oder eine grafische Nachricht ist.

12. Verfahren nach einem der vorhergehenden Ansprüche, **dadurch gekennzeichnet, dass** die bildliche Darstellung (17) zweidimensional oder dreidimensional ist.

13. System (1) für ein Senden mindestens einer Nachricht zwischen einer elektronischen Vorrichtung (3a) eines ersten Benutzers und einer elektronischen Vorrichtung (3b) eines zweiten Benutzers über einen Zeitmesser (100), das dazu eingerichtet ist, das Verfahren nach einem der vorhergehenden Ansprüche anzuwenden, das System (1) umfassend die erste und zweite elektronische Vorrichtung (3a, 3b), einen Server (2), umfassend eine Datenbank (4), die mit mindestens einer digitalen grafischen Modelldarstellung (10) versehen ist, und eine Aufbauvorrichtung (6), für ein Aufbauen visueller Elemente auf/in einer Ruhezone (18) der Nachricht, die auf dem gesamten Zeitmesser (100) oder einem Teil davon definiert ist, wobei die erste und zweite elektronische Vorrichtung (3a, 3b) und die Aufbauvorrichtung (6) mit dem Server (2) verbunden sind.

14. Computerprogramm, umfassend Programmcodebefehle für ein Ausführen der Schritte des Verfahrens nach einem der Ansprüche 1 bis 12, wenn das Programm von Steuer- und Verarbeitungseinheiten (9, 5a, 5b) auf dem Server (2) und jeweils auf der ersten und zweiten elektronischen Vorrichtung (3a, 3b) ausgeführt wird.

## Claims

1. A method for sending at least one message between a first user's electronic device (3a) and a second user's electronic device (3b) via a timepiece (100), said first and second electronic devices being connected to a remote server, comprising the following steps:
- creation (21) of the message to be sent by the first user's electronic device (3a);
- archiving (23) said created message on the remote server and in said first electronic device (3a) in the form of digital message data;
- generation (24), by the remote server and by said first electronic device (3a), of a digital graphic representation for dissemination of said message; this digital graphic representation for dissemination (12) thus generated is then, when a storage step (29) is carried out, archived in the database (4) of the server (2) and/or in the memory of the processing unit (5a) on the first electronic device (3a);
- building (30) a figurative representation pertaining to said digital graphic representation for dissemination of said message on a rest zone defined on all or part of the timepiece (100) using a visual element-building device controlled by the server;
- dissemination (38) of said message by the second user's electronic device (3b) from a figurative digital representation resulting from the capture, by this second electronic device (3b) of said figurative representation included on all or part of the timepiece (100).

2. The method according to the preceding claim, **characterised in that** the generation step (24) comprises a selection sub-step (25) for selecting, through a human-machine interface (HMI) on the first electronic device (3a), a model digital visual representation (10) from among various models (10) displayed on a display module (7a) of this first electronic device (3a), said digital graphic representation for dissemination (12) resulting from the processing, in particular, of said at least one message and of the model digital visual representation (10).

3. The method according to the preceding claim, **characterised in that** the generation step (24) comprises an application sub-step (28) for applying modification criteria to at least one descriptive parameter of the selected model digital visual representation (10).

4. The method according to any of the preceding claims, **characterised in that** the dissemination step (38) comprises a digitisation sub-step (39) for digitising the figurative representation (17) made on/in the rest zone (18) from the second electronic device (3b).

5. The method according to the preceding claim, **characterised in that** the dissemination step (38) comprises an identification sub-step (40) for identifying the message to be disseminated.

6. The method according to the preceding claim, **characterised in that** the dissemination step (38) comprises a transmission sub-step (41) for transmitting digital message data pertaining to said identified message to the second electronic device (3b).

7. The method according to any of the preceding claims, **characterised in that** the building step (30) comprises a generation sub-step (33) for generating at least one instruction for controlling a building device (6) for building said figurative representation (17) according to the descriptive characteristics of the digital graphic representation for dissemination (12), via a control unit (9) on the server (2).

8. The method according to any of the preceding claims, **characterised in that** the building step (30) comprises a building sub-step (34) for building the figurative representation (17) on/in the rest zone (18), said sub-step (34) implementing a material removal process in this rest zone (18) and/or a process of depositing at least one layer of material on this rest zone (18).

9. The method according to any of the preceding claims, **characterised in that** it comprises a building step (36) for building the timepiece (100) comprising an assembly sub-step (37) for assembling a set of components (20) constituting said timepiece (100) to which said at least one component (20) comprising the rest zone (18) provided with the figurative representation (17) belongs.

10. The method according to any of the preceding claims, **characterised in that** the rest zone (18) is defined on:
- a single component (20) of the timepiece (100), particularly a dial on the timepiece (100), or
- a plurality of individual components (20) of the timepiece (100).

11. The method according to any of the preceding claims, **characterised in that** said at least one message is an audio and/or video or graphical message.

12. The method according to any of the preceding claims, **characterised in that** the figurative representation (17) is two-dimensional or three-dimensional.

13. A system (1) for sending at least one message between a first user's electronic device (3a) and a second user's electronic device (3b) via a timepiece (100) configured to use the method according to any of the preceding claims, the system (1) comprising the first and second electronic devices (3a, 3b), a server (2) comprising a database (4) provided with at least one model digital graphic representation (10), and a building device (6) for building visual elements on/in a rest zone (18) of the message defined on all or part of the timepiece (100), the first and second electronic devices (3a, 3b) and the building device (6) being connected to said server (2).

14. A computer programme comprising programme code instructions for executing the steps of the method according to claims 1 to 12 when said programme is executed by control and processing units (9, 5a, 5b) on the server (2) and on the first and second electronic devices (3a, 3b), respectively.
